# DEMANDE DE BREVET EUROPEEN

(11) **EP 1 843 532 A1**
(43) Date de publication de la demande: **10.10.2007**
(21) Numéro de dépôt: 07105479.5
(22) Date de dépôt: 02.04.2007
(51) Int. Cl.: H04L 12/56

(54) **Utilisation de la contrepression en routage multi-chemins**

(30) Priorité: 03.04.2006 FR 0602902
(71) Demandeur: Alcatel Lucent, 75008 Paris (FR)
(72) Inventeur: Randriamasy, Claire-Sabine, 92190, MEUDON (FR); Fournie, Laurent, 75012, PARIS (FR); Hong, Dohy, 94120, FONTENAY SOUS BOIS (FR)
(74) Mandataire: Sciaux, Edmond

(57) **Abrégé**

Ce procédé consiste à :
- détecter dans un premier routeur (R3) une surcharge sur un lien (R3-R5) situé sur moins un chemin alternatif (R2-R3-R5) utilisé par au moins un deuxième routeur (R2) pour acheminer des flux de paquets de données de ce deuxième routeur (R2) vers un routeur dit de destination (R5),
- et envoyer alors du premier routeur (R3) à au moins ce deuxième routeur (R2) une instruction dite d'ajustement en amont (UMFA) demandant de supprimer au moins partiellement une déviation de flux de paquets de données vers ce chemin alternatif (R2-R3-R5).

## Description

L'invention concerne les réseaux de communication, à commutation de flux de paquets, et plus précisément un procédé de routage distribué et multichemin ; ainsi qu'un routeur pour la mise en oeuvre de ce procédé. Un tel procédé permet soit d'améliorer la robustesse du réseau en cas d'augmentation du trafic, soit d'allouer moins de ressources pour constituer des liens, pour une qualité de service donnée.

De façon très schématique, un réseau de communication peut être réduit à des routeurs, connectés les uns aux autres par des liens. Quand un routeur reçoit un paquet de données sur un de ses ports, il le mémorise temporairement puis le ré-émet à partir d'un autre port choisi de telle façon qu'il permet à ce paquet d'atteindre sa destination finale, après avoir transité éventuellement à travers d'autres routeurs. Chaque routeur possède une table, dite de routage, qui lui permet de choisir le port de retransmission pour chaque paquet, en fonction notamment de sa destination finale.

Dans de tels réseaux, l'opération de routage consiste à calculer au niveau des routeurs, ou du réseau, le chemin (ou « path » en anglais) que chaque flux de données va devoir suivre pour parvenir au niveau de sa destination finale, éventuellement à moindre coût. Un tel chemin est constitué d'une séquence ordonnée de liens ou « sauts » (« hops » en anglais) établis entre des paires de routeurs voisins (ou consécutifs), entre un routeur source et un routeur de destination. Ces chemins sont généralement déterminés de manière à supporter le trafic en fonction d'au moins un critère (avec ou sans contrainte(s)), comme par exemple la bande passante disponible, le nombre de liens, le coût administratif, et le temps de transit.

Afin qu'un lien puisse supporter une surcharge de trafic induite par une rafale passagère, il est par exemple possible de sur-dimensionner la capacité qui lui est allouée. C'est notamment ce que l'on fait dans le cas d'un routage reposant sur un unique chemin (« monochemin » en français,« Single-Path » en anglais).

Il est également possible de modifier la répartition de la charge en mettant en oeuvre un routage de type multichemin (ou MP pour « Multiple-Path » en anglais) en prévoyant pour certains chemins, définis chacun entre un routeur source et un routeur de destination, au moins un chemin disjoint alternatif, défini entre ces mêmes routeurs source et de destination. Dans ce cas, on définit pour chaque chemin un seuil de trafic au-delà duquel on considère qu'il y a surcharge de trafic, et en cas de détection d'un dépassement de seuil on transfère progressivement la surcharge de trafic vers au moins un chemin alternatif au moins partiellement disjoint. Ce type de routage multichemin permet de faire une répartition de charge (ou « load balancing » en anglais) destinée à répartir le trafic au sein du réseau et/ou anticiper les surcharges de lien(s), et donc de router plus de trafic et de mieux dimensionner le réseau.

La fonction de routage est généralement distribuée dans tous les routeurs d'un réseau, ce qui permet à chaque routeur de réagir rapidement lorsqu'un risque de surcharge apparaît sur un lien partant ce routeur. Un procédés de routage multichemin et distribué est décrit dans le document brevet FR 2869746 (ou EP 1615397) (il s'agit plus précisément d'un procédé de routage multicritère adaptatif appelés RMC (pour « Routing with Multiple Criteria »)). Il consiste notamment à attacher, à chaque paquet, l'identité du premier routeur qu'il a traversé et qui fait du routage multichemin ; et à constituer, dans chaque routeur, une table de routage à trois dimensions, qui prend en compte cette identité pour router un paquet.

Lorsqu'un routage de type multichemin et distribué est réalisable dans une pluralité de routeurs d'un réseau, le routage multichemin peut être utilisé par plusieurs routeurs simultanément. Dans les procédés connu de routage multichemin, rien n'est prévu pour éviter que l'utilisation d'un lien dans un chemin alternatif puisse amener la surcharge de ce lien. Ceci peut arriver surtout lorsqu'un lien est utilisé pour plusieurs chemins alternatifs simultanément.

Le but de l'invention est de proposer un procédé de routage multichemin et distribué permettant de remédier à la surcharge d'un lien dans ces circonstances.

Un premier objet de l'invention est un procédé de routage distribué multichemin, sur des liens entre des routeurs d'un réseau de télécommunication, le passage d'un routage mono-chemin à un routage multichemin consistant en une déviation de flux d'un chemin par défaut vers un chemin alternatif ; **caractérisé** en ce qu'il consiste à :
- détecter dans un premier routeur une surcharge sur un lien situé sur moins un chemin alternatif utilisé par au moins un deuxième routeur pour acheminer des flux de paquets de données de ce deuxième routeur vers un routeur dit de destination,
- et envoyer alors du premier routeur à au moins ce deuxième routeur une instruction dite d'ajustement en amont demandant de supprimer au moins partiellement une déviation de flux de paquets de données vers ce chemin alternatif.

Le procédé ainsi caractérisé permet de réduire la charge d'un lien surchargé à la suite d'au moins une déviation, parce que l'envoi d'une instruction vers un noeud, situé en amont, qui a décidé cette déviation, permet à ce noeud de réagir en supprimant cette déviation.

Selon un mode mise en oeuvre préférentiel, il consiste en outre à :
- déterminer dans le premier routeur tous les deuxièmes routeurs qui utilisent ce lien pour un chemin alternatif ,
- prévoir, à partir de mesures statistiques préalables, les diminutions de flux pouvant être obtenues respectivement par la suppression éventuelle des déviations sur les chemins alternatifs qui passent par ce lien,
- choisir un ou plusieurs de ces deuxièmes routeurs en comparant une diminution de flux qui est souhaitable pour ce chemin alternatif, avec les diminutions de flux pouvant être obtenues respectivement par la suppression éventuelle des déviations sur les chemins alternatifs qui passent par ce lien,
- et envoyer au(x) deuxième routeur(s) ainsi choisi(s) une instruction d'ajustement en amont demandant de supprimer au moins partiellement une déviation de flux vers un chemin alternatif qui passe par ce lien.

Le procédé ainsi caractérisé permet d'optimiser le choix de la déviation à supprimer.

L'invention a aussi pour objet un routeur pour la mise en oeuvre du procédé selon l'invention. Il est caractérisé en ce qu'il comprend des moyens de calcul agencés pour :
- détecter une surcharge sur un lien partant de ce premier routeur et situé sur moins un chemin alternatif utilisé par au moins un deuxième routeur,
- et envoyer alors du premier routeur à au moins ce deuxième routeur une instruction dite d'ajustement en amont demandant de supprimer au moins partiellement une déviation de flux de paquets de données vers ce chemin alternatif.

Selon un mode de réalisation préférentiel, lesdits moyens de calcul sont agencés pour :
- déterminer dans le premier routeur tous les deuxièmes routeurs qui utilisent ce lien pour un chemin alternatif,
- prévoir, à partir de mesures statistiques préalables, les diminutions de flux pouvant être obtenues respectivement par la suppression éventuelle des déviations sur les chemins alternatifs qui passent par ce lien,
- choisir un ou plusieurs de ces deuxièmes routeurs en comparant une diminution de flux qui est souhaitable pour ce chemin alternatif, avec les diminutions de flux pouvant être obtenues respectivement par la suppression éventuelle des déviations sur les chemins alternatifs qui passent par ce lien,
- et envoyer au(x) deuxième routeur(s) ainsi choisi(s) une instruction d'ajustement en amont demandant de supprimer au moins partiellement une déviation de flux vers ce chemin alternatif.

L'invention est particulièrement bien adaptée, bien que de façon non exclusive, aux réseaux de communication à protocole Internet (appelé aussi « IP »). Elle peut aussi être appliquée aux réseaux à plan de contrôle MPLS (« MultiProtocol Label Switching » - commutation d'étiquettes) ou GMPLS (« Generalized MPLS »). Elle est applicable sans difficultés aux réseaux ayant un grand nombre de routeurs.

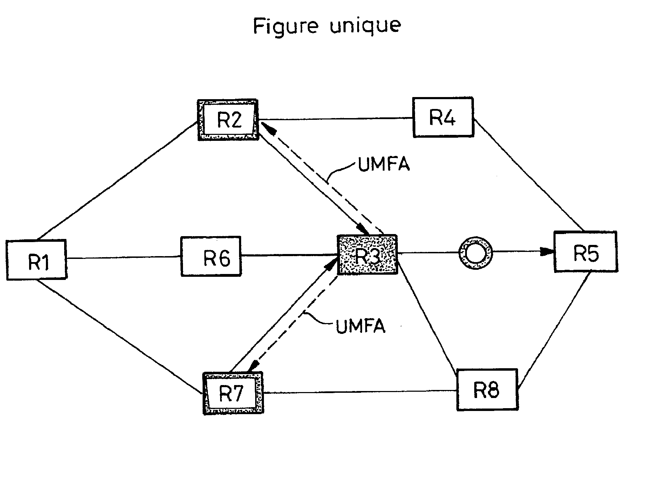

L'invention sera mieux comprise et d'autres caractéristiques apparaîtront à l'aide de la description ci-dessous et de la figure unique l'accompagnant.

L'invention concerne tous les réseaux mettant en oeuvre un procédé connu de routage de flux de paquets de données, qui a les caractéristiques suivantes :
- Suite à une alarme de dépassement de charge autorisée sur un lien, un routeur R décide de dévier une pluralité de sous-ensembles de flux, B1, ..., Bn d'un chemin par défaut P0 vers un chemin alternatif P1, choisi parmi les chemins alternatifs P1, P2, P3, etc, permettant d'aller du routeur R vers un routeur de destination D. Avant d'effectuer lui-même cette déviation, le routeur R envoie une instruction de déviation à lui-même et à tous les routeurs situés en aval de ce routeur R sur tous les chemins alternatifs P1, P2, P3, etc, permettant d'aller du routeur source R jusqu'au routeur de destination, D. La déviation du trafic d'un lien est réalisée progressivement par une suite d'instructions de déviation, chacune portant par exemple sur 5% du trafic de ce lien.
- Aucune instruction de déviation n'est émise le long du chemin par défaut P0. Mais seuls les routeurs du chemin par P0 faisant aussi partie d'un chemin alternatif sont susceptibles de recevoir des instructions de déviations.
- L'instruction de déviation, notée FDA dans ce qui suit, contient les informations suivantes :
   -- tₑ la date d'émission de l'instruction, cette émission étant déclenchée par la décision du passage du routage monochemin au routage multichemin,
   -- tₐ la date de la dernière alarme qui conduisit le routeur R à prendre cette décision,
   -- R l'identité du routeur qui émet l'instruction de déviation,
   -- les identités B1, ..., Bn des sous-ensembles de flux qui sont concernés par cette instruction de déviation,
   -- P1 le chemin alternatif (sous la forme d'une liste de sauts) que doivent suivre tous les sous-ensembles de flux identifiés par B1, ..., Bn.
      FDA = R, tₑ, tₐ, { B1, ..., Bn}, P1 constitue une instruction de déviation des sous-ensembles de flux B1, ..., Bn vers le chemin alternatif P1. Cette instruction n'indique que les sous-ensembles de flux déviés par le routeur R qui émet cette instruction. Elle ne mentionne pas ceux qui doivent rester sur le chemin par défaut P0. Cette instruction a pour effet d'assurer le routage de ces sous-ensembles de flux B1, ..., Bn tout le long du chemin alternatif P1 en aval du routeur R qui est passé en mode multichemin. Il est à remarquer qu'elle n'affecte pas le routage des flux qui doivent rester sur le chemin par défaut.
- Chaque instruction de déviation reçue par un routeur est mémorisée dans ce routeur. Lorsqu'elle sera exécutée, son exécution consistera à transformer l'instruction de déviation en une instruction de routage pour chaque sous-ensemble Bi mentionné dans l'instruction de déviation. Chaque instruction de routage ainsi générée peut être utilisée pour mettre à jour, la table de routage du routeur qui l'a reçue. Mais cette instruction de routage n'est pas forcément exécutée. Plusieurs routeurs peuvent être passés en mode de routage multichemin et être en concurrence avec le routeur R pour donner des instructions contradictoires à un même routeur Ra situé en aval. Ils peuvent avoir envoyé des instructions différentes, au cours d'un même cycle de décision, en ce qui concerne un même sous-ensemble de flux, Bi, et une même destination D. Pour maintenir la cohérence entre les décisions de routage des routeurs, c'est à dire sélectionner un seule sortie du routeur Ra en aval du routeur R, pour un sous-ensemble Bi donné, pour une destination D donnée, pendant un cycle de décision donné, les instructions concernant ce sous-ensemble Bi et cette destination D, sont traités selon un ordre de priorité. Cet ordre est défini par des règles globales qui sont les mêmes dans tous les routeurs du réseau, ce qui permet d'assurer que tous les routeurs destinataires d'une instruction la traitent avec la même priorité et donc exécutent une instruction prioritaire en même temps, ce qui, en plus de lever les contradictions, permet d'éviter les déviations de trafic, et des boucles.
- Une instruction mémorisée qui n'est pas prioritaire à un moment donné peut le devenir par la suite, par exemple si le routeur dont l'instruction avait la priorité est repassé en mode routage mono-chemin. Toutes les instructions de routage relatives à un ensemble Bi sont mémorisées. Une instruction de routage pour un ensemble Bi n'est effacée que au moment où les flux de Bi sont à nouveau routés selon le chemin par défaut.
- Selon un mode de mise en oeuvre préférentiel, les règles définissant la priorité sont les suivantes. Elles sont appliquées successivement dans cet ordre, si c'est nécessaire pour départager des instructions concurrentes :
   -- 1) L'instruction de routage qui a la date d'émission tₑ la plus récente est plus prioritaire.
   -- 2) Si plusieurs instruction de routage ont la même date d'émission, l'instruction de routage qui a la date d'alarme tₐ la plus récente est plus prioritaire.
   -- 3) Si plusieurs instruction de routage ont la même date d'émission tₑ , et la même date d'alarme tₐ, l'instruction de routage qui vient du routeur R le plus proche du routeur de destination D, est plus prioritaire.
   -- 4) Si plusieurs instructions de routage ont la même date d'émission tₑ , la même date d'alarme tₐ, et viennent de routeurs qui sont à une même distance du routeur de destination D, alors l'instruction de routage la plus prioritaire est celle qui contient une identité de routeur émetteur R telle que cette identité R a un certain ordre lexical.
- Une variante du procédé selon l'invention comporte une règle supplémentaire, portant sur un critère local. Elle permet d'éviter un allongement incontrôlé du trajet effectué par un ensemble de flux. Si cette variante est mise en oeuvre, la règle supplémentaire est appliquée préalablement aux règles 1 à 4, définies précédemment, et qui portent sur des critères globaux. Cette règle supplémentaire est la suivante : Sélectionner l'instruction de routage telle que la distance, mesurée en nombre de sauts, entre le noeud considéré et le noeud de destination, sur le chemin alternatif mentionné dans cette instruction, est la plus courte. Les règes 1 à 4 ne sont alors utilisées qu'en cas d'égalité des distances pour toutes les instructions de routage applicables à un flot.
- D'autre part, les instructions reçues ne peuvent être exécutées qu'après un délai prédéterminé, compté à partir d'un début de cycle dit de décision, synchrone pour tous les routeur, de sorte que si une instruction arrive en retard par rapport à une autre émise plus tard (parce qu'elle a suivi un chemin plus long), elle ne perd pas la priorité à laquelle elle a droit par sa date d'émission tₑ.
- Lorsque le routeur R décide de revenir au mode de routage monochemin, c'est à dire faire passer une pluralité de sous-ensembles de flux, B1, ..., Bn d'un chemin alternatif P1 vers un chemin par défaut P0 pour atteindre un routeur de destination D, il émet un autre type d'instruction, dite de retour, notée FRA. Comme pour la déviation, le retour est fait progressivement, par exemple par pas correspondant à 10% du trafic dévié. Avant d'effectuer lui-même ce retour, le routeur R envoie une instruction de retour à lui-même et à tous les routeurs situés en aval de ce routeur R sur le chemin alternatif P1, jusqu'au routeur de destination D. L'instruction FRA contient les informations suivantes :
   -- R l'identité du routeur qui émet l'instruction de retour,
   -- les identités Bi, ..., Bj des sous-ensembles de flux qui sont concernés par cette instruction de retour (elle ne concerne pas forcément tous les sous-ensembles B1, ..., Bn déviés par la précédente instruction de déviation),
   -- P1 l'identité du chemin alternatif que suivent ces des sous-ensembles de flux Bi, ..., Bj, et qu'ils doivent quitter pou revenir sur le chemin par défaut, prédéterminé et donc connu de tous les routeurs.

L'exécution de l'instruction de retour consistera à effacer dans la table de routage les instructions de routage correspondantes, c'est à dire contenant les informations comprises dans l'instruction de retour. Les instructions de retour sont exécutées avant les instructions de déviation.

**La figure** représente un exemple de réseau mettant en oeuvre le procédé selon l'invention Ce réseau comporte huit routeurs R1, ..., R8. Le routeur R1 est relié au routeur R5 notamment par un chemin R1-R2-R4-R5 et par un chemin R1-R7-R8-R5. Un routeur central R3 est relié directement à chacun des routeurs R2, R4, R5, R7, R8, et il relié au routeur R1 via un routeur R6.

Dans l'exemple illustré par cette figure, le chemin par défaut entre le routeur R3 et le routeur R5 pour tous les sous-ensembles de flux est le chemin R3-R5. A un instant donné, le lien R3-R5 approche de la saturation alors qu'il est utilisé dans un chemin alternatif R2-R3-R5, conformément à une instruction FDA envoyée par le routeur R2, et alors qu'il est utilisé dans un chemin alternatif R7-R3-R5, conformément à une autre instruction FDA envoyée par le routeur R7.

Le routeur R3 reçoit une alarme lui signalant que le lien R3-R5 approche de la saturation. Conformément à l'invention, le routeur R3 émet alors une instruction dite d'ajustement multichemin en amont, UMFA (« Upstream Multipath Forwarding Adjustment » en Anglais). Cette instruction UMFA est envoyée vers tous les routeurs qui ont envoyé précédemment des instructions de déviation FDA à ce routeur R3, en ne considérant que les instructions de déviation FDA qui ont encore un effet à l'instant considéré, l'effet d'une instruction de déviation FDA pouvant avoir été annulé par une instruction de retour RFDA reçue postérieurement. Dans cet exemple, le routeur R3 détermine, parmi les routeurs R2 et R7 qui lui ont envoyé des instructions FDA, quel routeur pourrait probablement dévier le plus de trafic hors du chemin R3-R5 qui est surchargené ; et il lui adresse cette instruction d'ajustement en amont, UMFA.

Si le routeur R3 est présentement en mode monochemin, le comportement du routeur R3 dépend de l'historique des alarmes reçues par le routeur R3 et concernant le lien R3-R5 :
- Si c'est la première fois que le routeur R3 reçoit une telle alarme, il reste dans le mode monochemin.
- Si ce n'est pas la première fois que le routeur R3 reçoit une telle alarme, il passe alors dans le mode multichemin. Il émet une instruction de déviation FDA vers des noeuds situés en aval, sur tous les chemins alternatifs (c'est à dire ne passant pas par R3-R5) dans la direction d'un routeur de destination. Par exemple, l'instruction FDA émise peut demander qu'une partie des flux destinés au routeur R5 passent par le chemin alternatif R3-R8-R5 au lieu du chemin par défaut R3-R5.

Pour déterminer, parmi les routeurs R2 et R7 qui lui ont envoyé des instructions FDA, quel routeur pourrait probablement dévier le plus de trafic hors du chemin R3-R5 qui est surchargené, le routeur R3 mémorise un historique de mesures (statistiques) de flux. Chaque fois qu'il a reçu et exécuté une instruction de déviation FDA, du routeur R2 par exemple, il a constaté et mesuré (statistiquement) une augmentation de la mesure du flux émis sur le chemin R3-R5, pour un sous-ensemble de flux donné et pour une destination donnée. Réciproquement, à partir de la connaissance de cette augmentation, il peut prévoir une diminution équivalente de la mesure (statistique) des flux, s'il demande au routeur R2 une suppression de la déviation pour ce sous-ensemble de flux donné et pour cette destination donnée. Il peut faire une prévision analogue pour les flux qui ont été précédemment déviés par le noeud R7.

Il fait ces deux prévisions puis les compare à la diminution de flux qui est souhaitable pour soulager le lien R3-R5. Enfin, il émet une ou plusieurs instructions UMFA, pour demander une déviation de flux sur un chemin n'utilisant pas le lien R3-R5, par exemple un autre chemin alternatif ou le chemin par défaut, au routeur R2, ou au routeur R7, ou aux deux routeurs, selon l'importance de la diminution à obtenir. Pour ne pas déstabiliser le réseau, il est toujours préférable de commander progressivement une déviation. En l'occurrence, il est préférable d'émettre une suite d'instructions UMFA provoquant chacune une petite diminution des flux sur le lien R3-R5. En outre, le fait de demander à tous les routeurs en amont, R2 et R7, de détourner leur trafic de R3-R5 risquerait de surcharger d'autres liens.

La mise en oeuvre du procédé selon l'invention dans un routeur est à la portée d'un Homme de l'Art, en réalisant des moyens logiciels réalisant les opérations décrites ci-dessus.

## Revendications

1. Procédé de routage distribué multichemin, sur des liens entre des routeurs (R1, ... , R8) d'un réseau de télécommunication, le passage d'un routage mono-chemin à un routage multichemin consistant en une déviation de flux d'un chemin par défaut (R2-R4-R5) vers un chemin alternatif (R2-R3-R5) ; **caractérisé en ce qu'**il consiste à :
- détecter dans un premier routeur (R3) une surcharge sur un lien (R3-R5) situé sur moins un chemin alternatif (R2-R3-R5) utilisé par au moins un deuxième routeur (R2) pour acheminer des flux de paquets de données de ce deuxième routeur (R2) vers un routeur dit de destination (R5),
- et envoyer alors du premier routeur (R3) à au moins ce deuxième routeur (R2) une instruction dite d'ajustement en amont (UMFA) demandant de supprimer au moins partiellement une déviation de flux de paquets de données vers ce chemin alternatif (R2-R3-R5).

2. Procédé selon la revendication 1, **caractérisé en ce qu'**il consiste en outre à :
- déterminer dans le premier routeur (R3) tous les deuxièmes routeurs (R2, R7) qui utilisent ce lien (R3-R5) pour un chemin alternatif (R2-R3-R5),
- prévoir, à partir de mesures statistiques préalables, les diminutions de flux pouvant être obtenues respectivement par la suppression éventuelle des déviations sur les chemins alternatifs (R2-R3-R5) qui passent par ce lien (R3-R5),
- choisir un ou plusieurs de ces deuxièmes routeurs (R2, R7) en comparant une diminution de flux qui est souhaitable pour ce chemin alternatif (R2-R3-R5), avec les diminutions de flux pouvant être obtenues respectivement par la suppression éventuelle des déviations sur les chemins alternatifs (R2-R3-R5) qui passent par ce lien (R3-R5),
- et envoyer au(x) deuxième routeur(s) ainsi choisi(s) une instruction d'ajustement en amont (UMFA) demandant de supprimer au moins partiellement une déviation de flux vers un chemin alternatif (R2-R3-R5) qui passe par ce lien (R3-R5).

3. Procédé selon la revendication 1, **caractérisé en ce que** si la surcharge persiste sur le même lien, il consiste en outre à faire passer le premier routeur (R3) du routage monochemin au routage multichemins, si ce n'est pas déjà fait.

4. Routeur (R3) susceptible d'être relié par une pluralité de liens à d'autres routeurs (R1, ... , R8) d'un réseau de télécommunication, comportant des moyens pour décider le passage d'un routage mono-chemin à un routage multichemin consistant en une déviation de flux d'un chemin par défaut (R2-R4-R5) vers un chemin alternatif (R2-R3-R5); **caractérisé en ce qu'**il comprend des moyens de calcul agencés pour :
- détecter une surcharge sur un lien (R3-R5) partant de ce premier routeur (R3) et situé sur moins un chemin alternatif (R2-R3-R5) utilisé par au moins un deuxième routeur (R2),
- et envoyer alors du premier routeur (R3) à au moins ce deuxième routeur (R2) une instruction dite d'ajustement en amont (UMFA) demandant de supprimer au moins partiellement une déviation de flux de paquets de données vers ce chemin alternatif (R2-R3-R5).

5. Routeur selon la revendication 4, **caractérisé en ce que** lesdits moyens de calcul sont agencés pour :
- déterminer dans le premier routeur (R3) tous les deuxièmes routeurs (R2, R7) qui utilisent ce lien (R3-R5) pour un chemin alternatif (R2-R3-R5),
- prévoir, à partir de mesures statistiques préalables, les diminutions de flux pouvant être obtenues respectivement par la suppression éventuelle des déviations sur les chemins alternatifs (R2-R3-R5) qui passent par ce lien (R3-R5),
- choisir un ou plusieurs de ces deuxièmes routeurs (R2, R7) en comparant une diminution de flux qui est souhaitable pour ce chemin alternatif (R2-R3-R5), avec les diminutions de flux pouvant être obtenues respectivement par la suppression éventuelle des déviations sur les chemins alternatifs (R2-R3-R5) qui passent par ce lien (R3-R5),
- et envoyer au(x) deuxième routeur(s) ainsi choisi(s) une instruction d'ajustement en amont (UMFA) demandant de supprimer au moins partiellement une déviation de flux vers ce chemin alternatif (R2-R3-R5).

6. Routeur selon la revendication 4, **caractérisé en ce que** lesdits moyens de calcul sont agencés en outre pour faire passer le premier routeur (R3) du routage monochemin au routage multichemins, si ce n'est pas déjà fait.

## Revendications modifiées

### Revendications modifiées conformément à la règle 86(2) CBE.

**1.** Procédé de routage distribué multichemin, sur des liens entre des routeurs (R1, ... , R8) d'un réseau de télécommunication, le passage d'un routage mono-chemin à un routage multichemin consistant en une déviation de flux d'un chemin par défaut (R2-R4-R5) vers un chemin alternatif (R2-R3-R5) ; **caractérisé en ce qu'** il consiste à :
- détecter dans un premier routeur (R3) une surcharge sur un lien (R3-R5) situé sur moins un chemin alternatif (R2-R3-R5) utilisé par au moins un deuxième routeur (R2) pour acheminer des flux de paquets de données de ce deuxième routeur (R2) vers un routeur dit de destination (R5),
- déterminer dans le premier routeur (R3) tous les deuxièmes routeurs (R2, R7) qui utilisent ce lien (R3-R5) pour un chemin alternatif (R2-R3-R5),
- et envoyer alors du premier routeur (R3) à au moins ce deuxième routeur (R2) une instruction dite d'ajustement en amont (UMFA) demandant de supprimer au moins partiellement une déviation de flux de paquets de données vers ce chemin alternatif (R2-R3-R5).

**2.** Procédé selon la revendication 1, **caractérisé en ce qu'**il consiste en outre à :
- prévoir, à partir de mesures statistiques préalables, les diminutions de flux pouvant être obtenues respectivement par la suppression éventuelle des déviations sur les chemins alternatifs (R2-R3-R5) qui passent par ce lien (R3-R5),
- choisir un ou plusieurs de ces deuxièmes routeurs (R2, R7) en comparant une diminution de flux qui est souhaitable pour ce chemin alternatif (R2-R3-R5), avec les diminutions de flux pouvant être obtenues respectivement par la suppression éventuelle des déviations sur les chemins alternatifs (R2-R3-R5) qui passent par ce lien (R3-R5),
- et envoyer au(x) deuxième routeur(s) ainsi choisi(s) une instruction d'ajustement en amont (UMFA) demandant de supprimer au moins partiellement une déviation de flux vers un chemin alternatif (R2-R3-R5) qui passe par ce lien (R3-R5).

**3.** Procédé selon la revendication 1, **caractérisé en ce que** si la surcharge persiste sur le même lien, il consiste en outre à faire passer le premier routeur (R3) du routage monochemin au routage multichemins, si ce n'est pas déjà fait.

**4.** Routeur (R3) susceptible d'être relié par une pluralité de liens à d'autres routeurs (R1, ... , R8) d'un réseau de télécommunication, comportant des moyens pour décider le passage d'un routage mono-chemin à un routage multichemin consistant en une déviation de flux d'un chemin par défaut (R2-R4-R5) vers un chemin alternatif (R2-R3-R5); **caractérisé en ce qu'**il comprend des moyens de calcul agencés pour :
- détecter une surcharge sur un lien (R3-R5) partant de ce premier routeur (R3) et situé sur moins un chemin alternatif (R2-R3-R5) utilisé par au moins un deuxième routeur (R2),
- déterminer dans ce premier routeur (R3) tous les deuxièmes routeurs (R2, R7) qui utilisent ce lien (R3-R5) pour un chemin alternatif (R2-R3-R5),
- et envoyer alors du premier routeur (R3) à au moins ce deuxième routeur (R2) une instruction dite d'ajustement en amont (UMFA) demandant de supprimer au moins partiellement une déviation de flux de paquets de données vers ce chemin alternatif (R2-R3-R5).

**5.** Routeur selon la revendication 4, **caractérisé en ce que** lesdits moyens de calcul sont agencés pour :
- prévoir, à partir de mesures statistiques préalables, les diminutions de flux pouvant être obtenues respectivement par la suppression éventuelle des déviations sur les chemins alternatifs (R2-R3-R5) qui passent par ce lien (R3-R5),
- choisir un ou plusieurs de ces deuxièmes routeurs (R2, R7) en comparant une diminution de flux qui est souhaitable pour ce chemin alternatif (R2-R3-R5), avec les diminutions de flux pouvant être obtenues respectivement par la suppression éventuelle des déviations sur les chemins alternatifs (R2-R3-R5) qui passent par ce lien (R3-R5),
- et envoyer au(x) deuxième routeur(s) ainsi choisi(s) une instruction d'ajustement en amont (UMFA) demandant de supprimer au moins partiellement une déviation de flux vers ce chemin alternatif (R2-R3-R5).

**6.** Routeur selon la revendication 4, **caractérisé en ce que** lesdits moyens de calcul sont agencés en outre pour faire passer le premier routeur (R3) du routage monochemin au routage multichemins, si ce n'est pas déjà fait.
